# EUROPEAN PATENT SPECIFICATION

(11) **EP 2 050 534 B1**
(45) Date of publication and mention of the grant of the patent: **12.10.2011**
(21) Application number: 09151334.1
(22) Date of filing: 12.03.2003
(51) Int. Cl.: B23Q 1/54, B23Q 3/18, B23Q 17/22, G01B 21/04, G01B 5/25

(54) **Method for checking a rotary axis with a self-centring sensing device**
Verfahren zum Prüfen einer Rotationsachse mit einer selbstzentrierenden Messvorrichtung
Méthode de contrôle d'un axe de rotation avec un dispositif de mesure autocentreur

(30) Priority: 13.03.2002 ES 200200597
(43) Date of publication of application: 22.04.2009
(62) Divisional of application: 03743888.4
(73) Proprietor: IBS Precision Engineering B.V., 5633 AD Eindhoven (NL)
(72) Inventor: Trapet, Eugen, 50015 Zaragoza (ES); Aguilar Martin, Juan José, 50015 Zaragoza (ES); Spaan, Henny, 5740 HK Beek en Donk (NL)
(74) Representative: Van den Heuvel, Henricus Theodorus

(56) References cited:
- EP-A- 1 146 314
- DE-A1- 19 921 325
- DE-U1- 29 916 325
- GB-A- 2 060 888
- GB-A- 2 197 478

## Description

The invention relates to a method for analysing the rotary axles of tooling machines (TMs) and coordinate measuring machines (CMs).

### Antecedents

Reference objects do exist and are in use in the form of plates of balls and bars of balls for checking the positioning of coordinate measuring machines (CMs). They are very economical when used in CMs. These objects cannot be used for checking tool machines (TMs) in the majority of cases, either because they lack a sensing device or, in many TMs, the appropriate measuring software. These problems are solved by using the invention herein, that is, with the development of a specific sensing device for TM positioning tests.

The UK patent application GB 2 197 478 describes a method for analysing the rotary axles of coordinate measuring machines. The method comprises the steps of placing a reference sphere on a revolving table of the machine, placing a self-sensing device, which is provided with a sensing probe, in the head of the machine, positioning the revolving table of the machine at an angle position, measuring the coordinates of the balls with the sensing probe, transferring the displacement values to a computer, repeating the measuring and transferring steps with the revolving table of the machine positioned at various angle positions and processing the generated displacement values in the computer. This method is time-consuming and is prone to measurement errors and inaccuracies.

The European patent application EP 1 146 314 A2 describes a method for parallel cinematic calibration of tooling machines (TMs), comprising the steps of placing multiple reference spheres on a revolving table of the machine, placing a self-sensing device, which is provided with linear axles, in the head of the machine, positioning the revolving table of the machine at an angle position, positioning the linear axles of the self-sensing device at a known position, such that at least three sensing device tips of the self-centring sensing device are in contact with the reference spheres and generating displacement values, transferring the displacement values to a computer, repeating the measuring and transferring steps with the revolving table of the machine positioned at various angle positions and processing the generated displacement values in the computer.

### Problems and Functions

The basic concept of tool machine (TM) positioning error tests with reference objects is that the tool is replaced by a sensing device, the tool machine (TM) is programmed to move the axles to defined positions thus placing the sensing device in contact with the reference spheres or other reference elements in the reference object (this document deals only with reference spheres).

However, there are several problems that prevent the known types of sensing devices of coordinate measuring machines (CMs) being used. In most cases it will not be possible to use a dynamic sensing device as is very common in CMs. This sensing device gives a pulse - when it touches the object - to read the position counters of the coordinate measuring machine (CM). Its use is not possible or is not comfortable due either to the lack of connection to the numeric control for the sensing device signal and/or the lack of possibility for transferring the measured data to the computer in which the test measurements are to be evaluated.

TM controls that do in fact possess an entry for such a type of sensing device do not have suitable measuring software for complex measuring. Its algorithms are too limited, for example, to be able to cope with measuring spheres.

Not only the programming but also execution of the measuring is slow and complicated if each reference element is sensed with various points, instead of going with the TM only from point to point, as is the way laser interferometers are used when checking a TM.

For these tests it would be appropriate to have a sensing device that indicated deviation in X, Y, Z simultaneously, for each programmed position in which the sensing device is in contact with a reference sphere in a reference object like a bar of balls. Thus it would be easily programmed and the programmes would be executed quickly, and it would not even be necessary to connect the computer or the sensing device to the numeric control of the TM. All of this is possible with a self-centring sensing device. This type of sensing device enables obtaining, at the same time, the position error in three coordinates when the TM with this sensing device is placed over a reference sphere of a bar of balls or the equivalent. The positions programmed should correspond to the true (calibrated) positions of the centres of the reference spheres of the bar of balls; if they do not correspond, deviations from the programmed values to the calibrated values must be taken into account.

Analogue sensing devices for CMs do exist, that allow assembling self-centring sensing device tips in the form of three balls or a cone.

But they are not suitable for TMs due to their lack of measuring rank. They have only a fraction of a millimetre but they tend to have at least 3 millimetres for compensating positioning errors and the faulty alignment of the reference object with regard to the TM axles for facilitating measuring.

These sensing devices are not suitable either because they have moving components with large masses, creating the danger of strong impacts in the objects and problems with vibrations.

This happens because they are constructed in a sequential kinematic way; this means that there are three linear movement systems (X, Y, Z): the first carries the rod, the second carries the first and the rod and the third carries the second and the first and the rod. Thus, the moving components carry a lot of mass and should be of extremely high precision because of the adding of errors of the components in the kinematic chain between the tip of the sensing device and the body of the sensing device that is attached to the TM head.

### Solution according to the invention

The invention is defined in claim 1.

Bearing in mind that it is not necessary to measure either any type of surface or any type of typography, as the objects are always going to be spheres of extreme hardness, low roughness and low shape error, the self-centring sensing device system is open to simplification and being made more suitable for the task of self-centring in reference spheres with positions relatively far from the self-centring sensing device positions. For this reason, a totally new self-centring sensing device concept could be developed, based on a kinematic parallel, implying in this case that measurement is taken directly on the surface of the reference sphere by the at least three systems of one-dimensional measuring systems that make up the three-dimensional self-centring sensing device. Thus one could reduce masses of the moving components, reduce volume of the sensing device, and reduce sensing forces. Simultaneously, precision could be improved in comparison to a sequential kinematic sensing device through lack of a "stack" of axles adding up errors. Fewer precision components, simpler assembly, and quicker and easier calibration of the self-centring sensing device also lead to a lower price.

The self-centring sensing device contains the following components:
- at least three sensing device tips that are in contact with the reference sphere, with typically spherical, flat or cylindrical surfaces - alternatives not being restricted to these shapes; the tips of the sensing device should be of high precision and the geometry must be recognised.
- each tip of the sensing device is fixed on a rod that moves when the self-centring sensing device centres itself on a reference sphere; the movement can be linear or rotary, or a combination between linear and rotary.
- in the event that one wishes to perform a purely linear or rotary motion, the rods are guided with high precision so that they execute either a linear movement or a rotary movement when they come into contact and self-centre on a reference sphere.
- such movements should be in different directions in order to touch the reference sphere at points that are far enough away from each other.
- in order to maintain contact with the reference sphere, pre-tensioned springs, pneumatic or hydraulic elements, or other elements that serve the same purpose, push the rods in the direction of the reference sphere; if there is no reference sphere in the measuring rank of the self-centring sensing device, mechanical buffers limit the movement of the rod.
- the motion of each rod is measured by a linear or rotary displacement sensor (according to the realization alternative); if the displacement sensor is an optical incremental sensor - without restricting the invention to this type of sensor - the reading ruler is normally placed on the rod and the fixed reading head on the body of the self-centring sensing device.
- the minimum of three displacements measured is transferred to a computer programme where the position of the self-centring sensing device is calculated in relation to the reference sphere that it is sensing, taking into account the displacement values and the model of the geometry of the self-centring sensing device components.
- the said calculation of the position of the self-centring sensing device in relation to the reference sphere requires knowing on the one hand the values indicated by the displacement sensors and on the other the parameters that describe with great accuracy the geometry of the self-centring sensing device; in other words: position and orientation of each of the elements; these parameters are called "parameters of the model" of the self-centring sensing device.

The said model depends on the way in which the self-centring sensing device is made and it depends on the precision that one wishes to obtain (more parameters may be necessary if a greater degree of accuracy is required):

For the creation of a self-centring sensing device with linearly movable rods, the basic parameters are as follows:
- coordinates X, Y, Z of the centre of the tip of the sensing device
- orientation of the normal vector of the plane of the tip of the sensing device j, q
- orientation of the rod axle j, q

In total there are 21 parameters plus the diameter of the reference sphere

The invention offers the following three alternatives in order to obtain a high degree of accuracy of the values of the parameters of the model:
1. measure them directly with an independent measuring system such as a CM
2. measure them indirectly, placing the sensing device in contact with a reference sphere and - maintaining the contact between the reference sphere and the self-centring sensing device - moving the sensing device or the reference sphere to known positions (positions that give different relative displacements between the reference sphere and the self-centring sensing device)

### Ad. 1:

In the case of the self-centring sensing device with linear movable rods (11), measurement is taken of the orientation of the rods, the orientations of the tips of the sensing device (12) and the X, Y, Z coordinates of the point of intersection of the rod axle with the plane of contact of the sensing device tip.

Another alternative for measuring the parameters of the model of the sensing device is to directly establish the relationship between the positions of the tips of the sensing device and the values indicated by the sensors, generating a correspondence table. This is done with a CM. The correspondence table is inserted when the self-centring sensing device is used to perform real measuring.

### Ad 2.

The second alternative according to the invention is to move the sensing device with a specific CM or TM over a number of known positions, while the tips of the sensing device are in contact with a reference sphere. The values indicated by the rotation sensors and the positions of the self-centring sensing device are recorded. This method also enables checking a self-centring sensing device, calibrated in advance. In order to calculate the parameters of the model, a programme of better parameter adjustment type is used, for example, according to the method of squared minimums (Gauss method) or a programme of better parameter adjustment according to the Simplex method.

Changing the positions of the tool on the base in such a way that they give rise each time to other combinations of the attachment elements in the tool, and attachment elements in the support base, a number of different and known positions of the calibration spheres are performed. The positions of the calibration spheres are measured with an independent measuring system, typically with a coordinate measuring machine (CM). Performing a series of measurements with different calibration sphere positions produces the required data to calculate better adjustment of the parameters of the model. This method also allows checking a previously calibrated, self-centring sensing device, and extending its calibration interval.

### Self-centring sensing device with linear movable rods

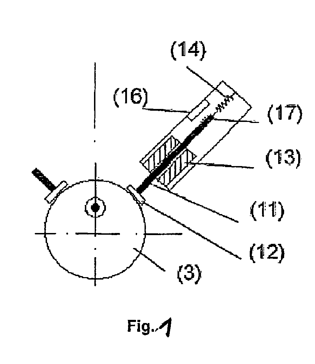

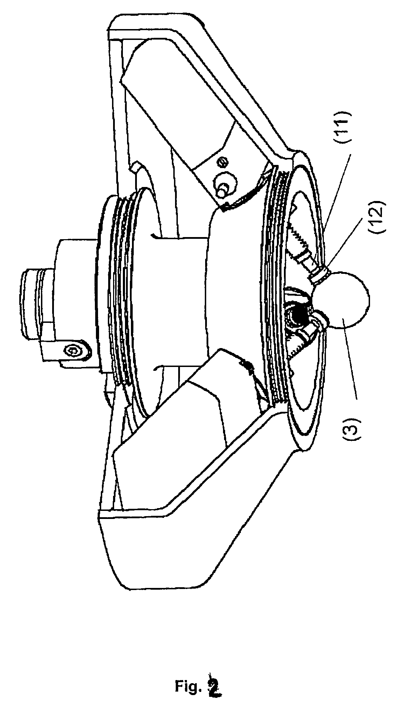

Fig. 1 illustrates the working principle, and Fig. 2 the complete self-centring sensing device. This paragraph deals with a self-centring sensing device that comprises three linearly movable cylindrical rods (11), with one flat sensing tip and one linear displacement sensor fixed on each of these rods. The movement axles of the rods ideally have 90° angles between them and the axles fictitiously intersect at a point on the outside of the self-centring sensing device body. This point is more or less the point at which the sensing device will be placed in respect to each reference sphere requiring to be measured. The rods, linearly guided by precision guides (13) are pushed by pre-tensioned springs in the direction of the said point. Thus, the sensing device tips, which have their contact planes perpendicular to the rods, maintain contact with said reference sphere if the latter falls within the measuring rank of the self-centring sensing device. The rods carry an optical ruler (17) that forms part of a displacement sensor for measuring the rod positions. A reading head (16) set in the self-centring sensing device body forms the other part of this sensor. The invention is not dependent on the type of displacement sensor. If there is no sphere in the measuring rank, the rods find themselves positioned at their limit, as defined by a mechanical buffer. This outer limit represents position ZERO of the rod, at which the counters of the displacement sensor begin.

As the rods and tips of the sensing device are high precision elements and as these elements are accessible in the assembled state of the sensing device, these elements are easily measured with a CM in order to determine the parameters of the geometric model of the self-centring sensing device. Said parameters are the orientations of the rods, the orientations of the sensing device tips and the coordinates of the intersection points between the rod axles and the contact planes of the sensing device tips. The reading heads (16) connect to an interface of counters in the computer. Reading the displacement values of the counters, the position of the reference sphere is calculated in a computer programme, taking into account that the displacement values give the displacements of the positions of the planes relative to their ZERO position (parallel to each other) and the planes of the tips of the sensing device being tangential to the reference sphere (with its known diameter); it only remains to intersect 3 planes to obtain the centre of the reference sphere.

To directly measure all the parameters of the geometric model with a CM turns out to be difficult and time-consuming in this realization of the self-centring sensing device. Thus, parameters of the model are determined indirectly, meaning positioning the self-centring sensing device by means of a CM, and measuring positions of reference spheres with the self-centring sensing device. Thus, with the positions of the self-centring sensing device known by the coordinates indicated by the CM, the set of parameters of the geometric model is calculated by means of an adjustment programme by squared minimums. However, the other methods for determining the parameters of the geometric model can be applied, that is 1) using a calibration tool or 2) establishing a correspondence table between the values indicated by the rotation sensors and the positions of the sensing device tips measured by a CM.

### Industrial application

There are several industrial applications for the invention; the most important of them being:
1. Analysing the rotary axles of TMs and CMs, measuring with the self-centring sensing device the displacements of a reference sphere placed on the revolving table when the revolving table is positioned at various angles, and the self-centring sensing device is positioned with the self-centring sensing device placed in the head of the TM or of the CM at known position that in the ideal case (without positioning errors of the axles) will find the sphere without displacement.

The test described, performed with the self-centring sensing device, is more economical than other corresponding tests. The reason for this is because the self-centring sensing device does not require connection to the numeric control of the machine to be analysed, because three coordinates are measured at once, and because programming of the machine turns out to be much simpler than with a sensing device that has to touch each reference sphere at a minimum of 5 different points instead of only one point to be programmed with the new sensing device as per the invention. Measuring with this sensing device according to the invention is also more accurate because the machine to be analysed is not in motion as occurs with dynamic sensing devices of the "trigger pulse" type. A movement during position-taking leads to additional errors owing to vibrations.

### Brief description of the drawings

Fig. 1: Diagram of a realization of a self-centring sensing device with parallel kinematics, with linear rods (11), flat sensing device tips (12), rods guides (13), pre-tensioned spring (14) for moving the rod with its flat sensing device tip (15) against the reference sphere (3), the position of the rod is measured with a linear displacement sensor, comprising a reading head (16) and an optical reading ruler (17)
Figure 2: System of self-centring sensing device according to Fig. 1 but complete.

## Claims

1. Method for analysing the rotary axles of tooling machines (TMs) and coordinate measuring machines (CMs) comprising a revolving table and a head, comprising the steps of:
A) placing a single reference sphere (3) on the revolving table of the machine;
B) placing a self-centring sensing device for analysing positioning errors of rotary axles of machines; having at least three rods (11) able to linearly move independently in different directions and each rod (11) having a sensing device tip (12); in the head of the machine;
C) positioning the revolving table of the machine at an angle position;
D) positioning the self-centring sensing device at a known position, such that at least three sensing device tips (12) of the self-centring sensing device are in contact with the single reference sphere (3) and generating displacement values of the at least three rods (11);
E) transferring the displacement values of the at least three rods (11) and the angle position of the revolving table of the machine to a computer;
F) repeating the steps C) and E) with the revolving table of the machine positioned at various angle positions;
H) processing the generated displacement values of the at least three rods (11) and the angle positions of the revolving table of the machine in the computer,
wherein during step H) the position of the self-centring sensing device is calculated in relation to the single reference sphere (3) that it is sensing, taking into account the displacement values of the at least three rods (11), the corresponding angle positions of the revolving table of the machine, and the model of the geometry of the self-centring sensing device.

2. Method according to claim 1, **characterized in that** the self-centring sensing device contains at least three rods (11), each of them having a spherical or flat sensing device tip (12), these rods (11) being moved freely along linear guides (13).

3. Method according to claim 2, **characterized in that** the generated displacement values in the computer are processed with a processing model with at least one of the following parameters:
• the positions of said sensing device tips (12)
• the orientations of said sensing device tips (12)
• the positions of said rods (11)
• the orientations of said rods (11)
• the positions of said displacement sensors (16)
• the orientations of said displacement sensors (16)
these parameters being used for processing relative displacements of the single reference sphere (3, 33) in relation to the self-centring sensing device on the basis of the positions measured by said linear displacement sensors (16).

4. Method according to claim 3, **characterised in that** the parameters of the model are measured directly in the components of the self-centring sensing device after assembling them, using independent measuring systems, such as CMs.

5. Method according to claim 3, **characterised in that** the parameters of the model are derived from real measurings of a single reference sphere (3) with the self-centring sensing device itself, successively placing the single reference sphere (3) in different positions in relation to the self-centring sensing device, and applying numerical solution-seeking programmes to calculate the set of values for said parameters of the model, that better describe the difference between the displacements measured and the real displacements between the single sphere (3) and the self-centring sensing device.

## Patentansprüche

1. Verfahren zur Analyse der Drehachsen von Werkzeugmaschinen (TMs) und Koordinatenmessgeräten (CMs) mit einem Drehtisch und einem Kopf, wobei das Verfahren folgende Schritte umfasst:
A) das Platzieren einer einzelnen Referenzkugel (3) auf dem Drehtisch der Maschine;
B) das Platzieren einer selbstzentrierenden Abtastvorrichtung zur Analyse von Positionsfehlern von Drehachsen von Maschinen mit mindestens drei Stäben (11), die sich unabhängig in unterschiedliche Richtungen linear bewegen können, wobei jeder Stab (11) über eine Abtastvorrichtungsspitze (12) im Kopf der Maschine verfügt;
C) das Positionieren des Drehtischs der Maschine in einer Winkelposition;
D) das Positionieren der selbstzentrierenden Abtastvorrichtung in einer bekannten Position, so dass mindestens drei Abtastvorrichtungsspitzen (12) der selbstzentrierenden Abtastvorrichtung in Kontakt mit der einzelnen Referenzkugel (3) sind und Verschiebungswerte der mindestens drei Stäbe (11) erzeugen;
E) die Übermittlung der Verschiebungswerte der mindestens drei Stäbe (11) und der Winkelposition des Drehtisches der Maschine an einen Computer;
F) die Wiederholung der Schritte C) und E) mit dem Drehtisch der Maschine in unterschiedlichen Winkelpositionen;
H) die Verarbeitung der erzeugten Verschiebungswerte der mindestens drei Stäbe (11) und der Winkelpositionen des Drehtischs der Maschine in dem Computer,
wobei in Schritt H) die Position der selbstzentrierenden Abtastvorrichtung im Verhältnis zu der einzelnen Referenzkugel (3), die sie abtastet, berechnet wird, unter Berücksichtigung der Verschiebungswerte der mindestens drei Stäbe (11), der entsprechenden Winkelpositionen des Drehtischs der Maschine und des Modells der Geometrie der selbstzentrierenden Abtastvorrichtung.

2. Verfahren nach Anspruch 1, **dadurch gekennzeichnet, dass** die selbstzentrierende Abtastvorrichtung mindestens drei Stäbe (11) umfasst, die jeweils eine kugelförmige oder flache Abtastvorrichtungsspitze (12) haben, wobei die Stäbe (11) frei entlang Linearführungen (13) bewegt werden.

3. Verfahren nach Anspruch 2, **dadurch gekennzeichnet, dass** die erzeugten Verschiebungswerte im Computer mit einem Verarbeitungsmodell mit mindestens einem der folgenden Parameter verarbeitet werden:
- den Positionen der Abtastvorrichtungsspitzen (12)
- den Ausrichtungen der Abtastvorrichtungsspitzen (12)
- den Positionen der Stäbe (11)
- den Ausrichtungen der Stäbe (11)
- den Positionen der Verschiebungssensoren (16)
- den Ausrichtungen der Verschiebungssensoren (16)
wobei diese Parameter zur Verarbeitung der relativen Verschiebungen der einzelnen Referenzkugel (3, 33) im Verhältnis zu der selbstzentrierenden Abtastvorrichtung auf der Basis der von den linearen Verschiebungssensoren (16) gemessenen Positionen verwendet werden.

4. Verfahren nach Anspruch 3, **dadurch gekennzeichnet, dass** die Parameter des Modells direkt in den Komponenten der selbstzentrierenden Abtastvorrichtung nach deren Zusammenbau mit Hilfe unabhängiger Messsysteme wie CM gemessen werden.

5. Verfahren nach Anspruch 3, **dadurch gekennzeichnet, dass** die Parameter des Modells von tatsächlichen Messungen einer einzelnen Referenzkugel (3) mit der selbstzentrierenden Abtastvorrichtung selbst abgeleitet werden, indem die einzelne Referenzkugel (3) nacheinander in verschiedene Positionen im Verhältnis zu der selbstzentrierenden Abtastvorrichtung platziert wird und numerische lösungssuchende Programme zur Berechnung der Wertereihe für die Parameter des Modells angewendet werden, die den Unterschied zwischen den gemessenen Verschiebungen und den tatsächlichen Verschiebungen zwischen der einzelnen Kugel (3) und der selbstzentrierenden Abtastvorrichtung besser beschreiben.

## Revendications

1. Procédé pour analyser les axes de rotation de machines-outils (TM) et de machines de mesure tridimensionnelle (CM) comprenant une table tournante et une tête, comprenant les étapes consistant :
A) à placer une sphère de référence unique (3) sur la table tournante de la machine ;
B) à placer, dans la tête de la machine, un palpeur autocentreur pour analyser les erreurs de positionnement des axes de rotation de machines, comportant au moins trois tiges (11) capables de se déplacer linéairement indépendamment dans différentes directions et chaque tige (11) comportant une pointe palpeuse (12) ;
C) à positionner la table tournante de la machine dans une position angulaire ;
D) à positionner le palpeur autocentreur dans une position connue de telle sorte qu'au moins trois pointes palpeuses (12) du palpeur autocentreur soient en contact avec la sphère de référence unique (3), et à produire des valeurs de déplacement des au moins trois tiges (11) ;
E) à transférer à un calculateur les valeurs de déplacement des au moins trois tiges (11) et la position angulaire de la table tournante de la machine ;
F) à répéter les étapes C) et E), la table tournante de la machine étant positionnée dans diverses positions angulaires ;
H) à traiter dans le calculateur les valeurs produites sur le déplacement des au moins trois tiges (11) et les positions angulaires de la table tournante de la machine,
étant entendu que, pendant l'étape H), la position du palpeur autocentreur est calculée par rapport à la sphère de référence unique (3) qu'il palpe, en tenant compte des valeurs de déplacement des au moins trois tiges (11), des positions angulaires correspondantes de la table tournante de la machine et du modèle de la géométrie du palpeur autocentreur.

2. Procédé selon la revendication 1, **caractérisé en ce que** le palpeur autocentreur contient au moins trois tiges (11), chacune d'elles comportant une pointe palpeuse sphérique ou plate (12), ces tiges (11) étant déplacées librement suivant des guides linéaires (13).

3. Procédé selon la revendication 2, **caractérisé en ce que** les valeurs de déplacement produites dans le calculateur sont traitées avec un modèle de traitement comportant au moins l'un des paramètres suivants :
• les positions desdites pointes palpeuses (12) ;
• les orientations desdites pointes palpeuses (12) ;
• les positions desdites tiges (11) ;
• les orientations desdites tiges (11) ;
• les positions desdits capteurs de déplacement (16) ;
• les orientations desdits capteurs de déplacement (16),
ces paramètres étant utilisés pour traiter les déplacements relatifs de la sphère de référence unique (3, 33) par rapport au palpeur autocentreur sur la base des positions mesurées par lesdits capteurs de déplacement linéaire (16).

4. Procédé selon la revendication 3, **caractérisé en ce que** les paramètres du modèle sont mesurés directement dans les composants du palpeur autocentreur après leur assemblage, en utilisant des systèmes de mesure indépendants tels que des CM.

5. Procédé selon la revendication 3, **caractérisé en ce que** les paramètres du modèle sont dérivés de mesures réelles d'une sphère de référence unique (3) avec le palpeur autocentreur lui-même, en plaçant successivement la sphère de référence unique (3) dans des positions différentes par rapport au palpeur autocentreur et en appliquant des programmes numériques de recherche de solutions pour calculer la série de valeurs desdits paramètres du modèle qui décrivent mieux la différence entre les déplacements mesurés et les déplacements réels entre la sphère unique (3) et le palpeur autocentreur.
